# EUROPEAN PATENT SPECIFICATION

(11) **EP 2 333 025 B1**
(45) Date of publication and mention of the grant of the patent: **16.01.2013**
(21) Application number: 10192670.7
(22) Date of filing: 26.11.2010
(51) Int. Cl.: C09D 183/12, C08K 5/5419

(54) **Articles comprising a weather resistant silicone coating**
Artikel mit witterungsbeständiger Silikonbeschichtung
Articles à revetement en silicone résistant aux intempéries

(30) Priority: 13.12.2009 US 636750
(43) Date of publication of application: 15.06.2011
(73) Proprietor: General Electric Company, Schenectady, NY 12345 (US)
(72) Inventor: Butts, Matthew David, Niskayuna, NY 12309 (US); Bablin, John Matthew, Niskayuna, NY 12309 (US); Gascoyne, David Gilles, Niskayuna, NY 12309 (US); Stein, Judith, Niskayuna, NY 12309 (US); Richards, William David, Niskayuna, NY 12309 (US)
(74) Representative: Szary, Anne Catherine

(56) References cited:
- EP-A2- 0 885 938
- WO-A1-2008/132196

## Description

### FIELD OF THE INVENTION

The invention includes embodiments that relate to coated articles. More particularly, the invention includes embodiments that relate to weather resistant coated articles.

### BACKGROUND OF THE INVENTION

The exposure of critical structures to harsh environments, including the effects of erosion and/or the accretion of ice or debris, poses many problems with respect to efficiency of operation and safety. For example, accretion of ice in aircraft engines is a significant problem in the aviation industry. Atmospheric icing can affect the performance of fan blades, inlet guide vanes, fan exit guide vanes, etc. and in extreme cases can result in engine flameouts. Ice accretion on aircraft fuselages and wings also poses a hazard, affecting aerodynamic performance and safety. The problems are not limited to the aviation industry. Ice buildup on wind turbine blades in cold climates can reduce the efficiency of power generation, sometimes requiring turbine shutdown.

Presently there exist a number of methods for actively ice-protecting critical structures operating in harsh environments. These include the spraying of hot de-icing fluids at high pressures (aircraft wings) or the routing of hot air or resistive heating (aircraft engines). Mechanical systems, on the other hand, physically remove accreted ice by deforming the underlying structure through the use of surface actuation, such as in small aircraft propeller blades. Specialized icephobic coatings are an attractive alternative. A coatings approach presents a passive method for controlling ice accretion that may be integrated into existing structures and designs. Unlike de-icing fluids, these coatings are long lasting and are not environmentally hazardous. Furthermore, coatings do not increase the energy cost of the system, unlike wing/blade heating or pneumatic covering approaches. Despite over half a century's worth of targeted research and development, no existing coating technology has been both successfully commercialized and satisfactorily proven effective in the field.

In addition to the problem of ice accretion, structures exposed to the environment are often subjected to other detrimental effects of weathering, such as erosion by particles or rain, for example, or the accumulation of debris, such as dirt or insects over time. Thus, there is a need for durable, weather resistant coatings that can be applied to parts that are exposed to environmental weathering.

EP-A-0885938 discloses anti-fouling coatings comprising a room temperature vulcanizable polyorganosiloxane composition and a polyorganosiloxane free from silanol groups and comprising at least one hydroxy- or alkoxy-terminated polyoxyalkylenealkyl radical. The latter is capable of blooming to the surface of the cured room temperature vulcanizable composition, thus inhibiting the deposition of marine life on the coated article.

### BRIEF SUMMARY OF THE INVENTION

The coatings of the present invention have been found to substantially reduce the adhesion strength of ice to the surface of coated parts. Furthermore, the coatings exhibit significant resistance to other harsh environmental factors including sand or grit erosion as well as the buildup of debris such as dirt or insects.

In one embodiment, an article comprises a weatherable surface exposed to precipitation or airborne debris; and a weather resistant coating disposed on the weatherable surface, wherein the coating comprises component A, a one- or two-part room temperature vulcanizable polyorganosiloxane composition; and component B, an ice release-enhancing proportion of at least one silicon-containing compound comprising one or more silanol or alkoxy-silyl groups and comprising from 10 weight percent to 85 weight percent of at least one hydroxy-terminated or alkoxy-terminated polyoxyalkylenealkyl radical; and any reaction products thereof.

### BRIEF DESCRIPTION OF THE DRAWINGS

FIG. 1 displays ice adhesion data for coating compositions comprising AK21XS and AK3067 with and without the addition of 5 weight percent additive 1.

FIG. 2 displays ice adhesion data for coating compositions comprising AK21XS and AK21XS with varying percentages of additive 2.

FIG. 3 illustrates ice adhesion data for a single coupon of AK3067 comprising 5 weight percent of additive 1.

FIG. 4 displays grit erosion data for coating compositions comprising AK3067 with and without 5 weight percent additive 1.

FIG. 5 displays grit erosion data for coating compositions comprising AK21XS with and without 10 weight percent additive 2.

### DETAILED DESCRIPTION OF THE INVENTION

Disclosed herein are coating compositions with improved icephobic, erosion resistance and debris resistance properties. The combination of specifically defined silicone additives and curable silicone materials provides coating compositions that reduce the strength of ice adhesion on article surfaces. In some embodiments, the coating compositions are particularly useful in protecting one or more weatherable surfaces, including the surfaces of parts which are exposed to environmental weathering from degradation by the surrounding environment or the buildup of ice or debris such as dirt or insects. As used herein, the term "weather resistant" refers to the resistance to buildup of debris such as dirt or insects, the resistance to erosion (for example by dirt or rain), and the resistance to ice adhesion. The term "erosion resistant" refers to resistance to erosion induced by impacting solid or liquid particles and/or impingement. The weather resistant coatings are also resistant to degradation by environmental factors including extreme temperature, and sunlight.

The term "icephobic" is used to describe a coating that reduces the adhesion strength of ice to a surface, e.g. reduces the shear force required to remove the ice. In certain embodiments, the weatherable surface is an aerodynamic surface, including, but not limited to, the surface of aircraft components or wind turbine components. The weatherable surface can include the surface of structures, equipment and components or parts of equipment that encounter the environment, including moisture in air. Examples of components that can be protected by the disclosed coatings include, but are not limited to, aircraft engine components such as fan blades and air splitters as well as aircraft fuselages, aircraft wings, aircraft propeller blades, wind turbine blades, gas turbines and off-shore oil and gas structures.

In some embodiments, it is desirable to prevent the loss of material from, or alteration of the dimensions of, a component or part through either erosion or the buildup of ice or debris thereon, so that the original shape, volume, contours and aerodynamic properties of the part are most nearly preserved. The coating compositions disclosed herein protect the weatherable structure from erosion caused by particle impact and/or impingement. Erosion by particle impact is caused by particles carried in air currents. Erosion by impingement includes degradation caused by liquid droplets carried by air currents which can additionally lead to corrosion. More than one of the mechanisms of particle impact or impingement, can simultaneously act on a weatherable structure.

The word "component" is frequently employed herein to refer to a structural part, or alternatively, to designate the materials present in the compositions of the invention. Component A of the coating compositions of the invention can be a conventional one-part or two-part room temperature vulcanizable (hereinafter sometimes "RTV") composition. These are often also referred to as "moisture cure" compositions. It typically comprises at least one reactive polyorganosiloxane (hereinafter sometimes designated "silicone" for brevity), at least one condensation catalyst and at least one crosslinking agent.

The reactive silicone is most often a polydialkylsiloxane, typically of the formula:

R¹(SiR²R²O)ₘ SiR²R²R¹ (I)

wherein each R¹ is hydroxyl or

-O-Si(R³)ₐ-(OR⁴)₃₋ₐ (II)

and wherein each R² is independently a hydrocarbon or fluorinated hydrocarbon radical, each R³ and R⁴ is a hydrocarbon radical, a is 0, 1 or 2 and m has a value such that the viscosity of said reactive silicone under ambient temperature and pressure conditions is up to 160,000 mPa·s (centipoise). Illustrative hydrocarbon radicals are C_{1- 20} alkyl, C₆₋₂₀ aryl, alkylaryl, vinyl, isopropenyl, allyl, butenyl, methyl and hexenyl. An illustrative fluorinated hydrocarbon radical is 3, 3, 3- trifluoropropyl. Most often each R², R³ and R⁴ is alkyl or methyl. R¹, R², R³ and R⁴ are not hydrophilic. In one embodiment, the reactive silicone is present in the component A composition at a concentration from 40 weight percent to 98 weight percent. In another embodiment, the reactive silicone is present in the component A composition at a concentration from 60 weight percent to 98 weight percent.

It is within the scope of the invention to employ two or more reactive silicones, differing in average molecular weight. This may afford a bimodal composition having performance advantages over a simple monomodal composition.

The condensation catalyst may be any of those known to be useful for promoting condensation curing of an RTV material. Suitable catalysts include compounds of tin, zirconium, titanium and aluminum, as illustrated by dibutyltindilaurate, dibutyltindiacetate, dibutyltin methoxide, dibutyltin bis (acetylacetonate), diisopropoxidetitanium bis(acetylacetonate), titanium naphthenate, tetrabutyltitanate, and zirconium octanoate or mixtures thereof. Various salts of organic acids or mixtures of salts with such metals as lead, iron, cobalt, manganese, zinc, antimony and bismuth may also be employed, as may non-metallic catalysts such as hexylammonium acetate and benzyltrimethylammonium acetate. In one embodiment, the condensation catalyst is present in the component A composition at a concentration from 0.01 weight percent to 10 weight percent. In another embodiment, the condensation catalyst is present in the component A composition at a concentration from 0.05 weight percent to 4.0 weight percent.

As crosslinking agents, trifunctional (T) and tetrafunctional (Q) silanes are useful, the term "functional" in this context denoting the presence of a silicon-oxygen bond. They include compounds such as methyltrimethoxysilane, methyltriethoxysilane, 2-cyanoethyltrimethoxysilane, methyl triacetoxysilane, tetraethyl silicate, and tetra-n-propyl silicate. Other crosslinking agents could be ketoximinosilanes, enoxysilanes, or alkenylsilanes such as vinyl tris (methylethylketoximino)silane or vinyl triacetoxysilane. Mixtures of crosslinking agents may also be used. In one embodiment, the crosslinking agent is present in the component A composition at a concentration from 0.10 weight percent to 20 weight percent. In another embodiment, the crosslinking agent is present in the Component A composition at a concentration from 1.0 weight percent to 10 weight percent.

Component B is a silicon-containing compound comprising one or more silanol or alkoxysilyl groups and at least one hydrophilic group. The hydrophilic group may be a hydroxy- or alkoxy-terminated polyoxyalkylenealkyl radical. Said radical or radicals comprise from 10 weight percent to 85 weight percent of component B; that is, the molecular weight attributable to said radicals is 10 to 85 percent of the total molecular weight attributable to component B. In one embodiment, component B represents from 0.1 weight percent to 50 weight percent of the coating composition. In another embodiment, component B represents from 0.2 weight percent to 30 weight percent of the coating composition. Without intending to be limited by theory, suitable component B compounds are those which are theoretically capable of covalently bonding to one or more constituents of component A upon curing of the coating composition.

In some embodiments, component B comprises compounds of the formula

R⁵(SiR⁶R⁷O)ₙSiR⁶R⁷R⁵ (III)

wherein R⁵, R⁶ and R⁷ are independently defined as follows: at least one of the R^{5,6,7} radicals has the formula

-R⁸-(OR⁹) _{z}-OR¹⁰; (IV)

at least one of the R^{5,6,7} radicals is a hydroxyl group or an OR¹¹ group; and any remaining R^{5,6,7} radicals are hydrocarbon or fluorinated hydrocarbon radicals, wherein R⁸ and each R⁹ are independently a C₂₋₆ alkylene or a substituted alkylene, R¹⁰ is hydrogen or a C₁₋₄ primary or secondary alkyl, and R¹¹ is a C₁₋₁₀ primary or secondary alkyl; n has a value such that the weight average molecular weight of the compound is in the range of 300 to 40,000; and z and the number of radicals of formula (IV) are defined such component B comprises from 10 weight percent to 85 weight percent radicals of formula (IV). The illustrative radicals for R⁵⁻⁷ are the same as for R², provided that at least one of these radicals has the formula (IV) and at least one of these radicals is a hydroxyl or OR¹¹ group. R⁸ and R⁹ may be, for example, ethylene, propylene, or trimethylene. R¹⁰ is most often hydrogen or methyl.

Illustrative examples of compounds of formula (III) are (MeO)₃Si(CH₂)₃(OCH₂CH₂)₃OMe, (MeO)₃Si(CH₂)₃(OCH₂CH₂)₆₋₉OMe and (MeO)₃Si(CH₂)₃(OCH₂CH₂)_{9#12}OMe, which are all available from Gelest, Inc., as well as copolymers such as (EtO)₃SiO(SiMe₂O)₂₀(SiMe(CH₂CH₂CH₂(OCH₂CH₂)₁₂0H)0)₅Si(OEt)₃ and Me₂(EtO)SiO(SiMe₂O)₂₀(SiMe(CH₂CH₂CH₂(OCH₂CH₂)₁₂0H)0)₅Si(OEt)Me₂, with the number of repeat units being averages. Polymers of this type can be random copolymers or block copolymers.

In other embodiments, component B comprises compounds of the formula

R¹²R¹³R¹⁴Si(OSiR²₂)_{X}-R⁸-(OR⁹)_{Z}O-R⁸(R²₂SiO)ySiR¹²R¹³R¹⁴ (V)

wherein at least one of the independent R¹², R¹³ and R¹⁴ groups is a hydroxyl group or an OR¹¹ group and any remaining R¹², R¹³ and R¹⁴ groups are independently hydrocarbon radicals, fluorinated hydrocarbons or radicals of formula (IV); R², R⁸ and R⁹ radicals are as defined above; and x, y and z have values such that the average molecular weight of the compound is in the range of 400 to 50,000 and the compound comprises at least about 5% by weight non silicone material. The illustrative hydrocarbon or fluorinated hydrocarbon radicals for R¹²⁻¹⁴ are the same as for R₂.

One illustrative compound of formula (V) is bis(triethoxysilylpropyl)polyethylene oxide (25-30 ethylene oxide units) which is available from Gelest, Inc., with the catalog number SIB 1824.84. More generally, the compounds employed as component B should contain radicals of formula (IV) in an amount to provide about from 5 percent to 80 percent by weight of the molecule.

The component A described herein may contain other constituents such as reinforcing and extending (non-reinforcing) fillers. An example of a commercially available reinforcing filler is Aerosil® manufactured by Evonik Industries. Suitable reinforcing fillers have a primary particle size of about 5 nm to about 20 nm, and are available in the form of aggregated particles having an average size from about 50 nm to about 300 nm. Suitable fillers include silica fillers, including fumed silica and precipitated silica. Theses two forms of silica have surface areas in the ranges of 90 to 325 m²/g and 8 to 150 m²/g, respectively. Colloidal silica may also be used.

The reinforcing filler is most often pretreated with a treating agent to render it hydrophobic. Typical treating agents include cyclic siloxanes, such as cyclooctamethyltetrasiloxane, and acyclic and cyclic organosilazanes such as hexamethyldisilazane, 1, 3 divinyl-1,1,3,3,-tretramethyldisilazane, hexamethylcyclotrisilazane, octamethylcyclotetrasilazane and mixtures of these.

Non-reinforcing fillers include titanium dioxide, lithopone, zinc oxide, zirconium silicate, iron oxides, diatomaceous earth, calcium carbonate, mica, aluminum oxides, glass fibers or spheres, magnesium oxide, chromic oxide, zirconium oxide, crushed quartz, calcined clay, talc, kaolin, asbestos, carbon, graphite, cork, cotton, synthetic fibers, and carbon nanotubes. More than one type of filler may be included in the composition, for example both silica and glass may be added to a composition.

The coating compositions of this invention may also incorporate further constituents such as non-reactive silicone oils, dyes, pigments, solubilizing agents and solvents to render them sprayable if sprayability is desired. These may be introduced as part of component A, as one or more components of the addition curable composition, or as adjuvants to the entire composition, as appropriate. Suitable solvents include aromatic hydrocarbons such as toluene or xylene and aliphatic hydrocarbons such as petroleum naphtha.

In certain embodiments, the coating compositions disclosed herein include an antioxidant. The antioxidant can be present in the coating composition in an amount between about 0.01 weight percent and about 5 weight percent based on the total weight of the coating composition. In one embodiment, the antioxidant is present in the coating composition in an amount between about 0.01 weight percent and about 2 weight percent based on the total weight of the coating composition. An example of a suitable antioxidant is 2,2'-methylene-bis(4-methyl-6-tert-butylphenol).

Coatings comprising compositions of the present invention can be applied directly to a structure, part, piece of equipment or one or more components of equipment, or may be applied to one or more other coatings that exist on the structure, etc. The coatings can be applied by any method known to those skilled in the art, such as by spraying, roll coating, brush painting, doctor blading or dip or flow coating. The coating thickness after drying is from about ≤.4 µm (1 mil) to about ≤.8 mm (200 mils).

In some embodiments, the moisture cure coating compositions of the present invention are applied in two or more steps. First, only component A is applied to a substrate or primed substrate, and then after a suitable amount of time, a second coat (and optionally subsequent coats) comprising both component A and component B is applied. Similarly, addition curable coatings can be prepared in two or more steps in some embodiments. First, a one or two part addition curable composition devoid of any hydrophilic functionality is applied, followed by one or more coats of addition curable compositions comprising covalently bound hydrophilic functionality.

The following examples are intended only to illustrate methods and embodiments in accordance with the invention and as such should not be construed as imposing limitations upon the claims. All AEROKRET silicone formulations were obtained from Analytical Services & Materials, Inc. (AS&M). Note that in some instances, examples including formulations of AEROKRET 3067 utilized exact replicas of the AEROKRET 3067 formulation. All coatings of the invention also comprised 1.25 weight percent (relative to the weight of additive) 2,2'-methylene-bis(4-methyl-6-tert-butylphenol).

### EXAMPLES

### Example 1

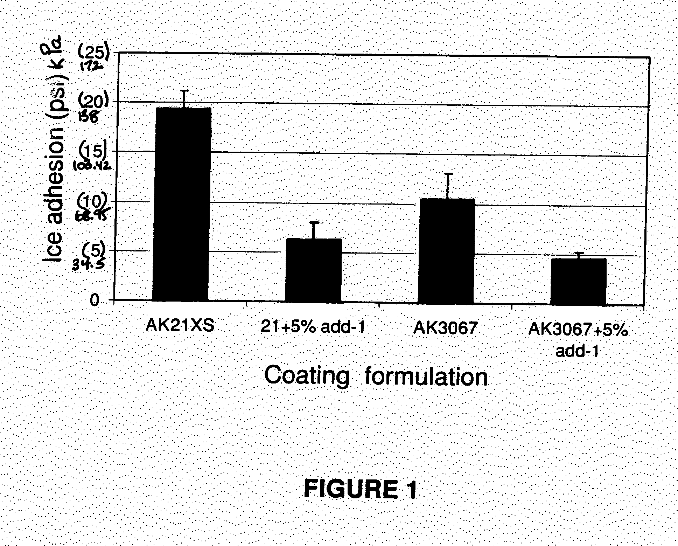

The moisture cure silicone coating formulation AEROKRET 21XS (AK21XS) was applied in two coats to a primed aluminum substrate and allowed to cure to produce a first coated substrate. Separately, a second coated substrate was produced by first applying a single coat of AK21XS to a primed aluminum substrate. After two hours, a single coating of AK21XS, comprising 5 weight percent (based on the total weight of the final cured coating) the reactive additive (MeO)₃Si(CH₂)₃(OCH₂CH₂)₁₄OH (additive 1), was applied to the first coat of AK21XS and allowed to cure. Third and fourth coated substrates were produced by repeating these two experiments with the replacement of AK21XS with AK3067. The adhesion strength of rime ice to the coated substrates was measured in an icing wind tunnel using a proprietary fixture. The ice adhesion data, measured in KPa (psi (pounds per square inch)), is shown in Fig. 1. It is clear from this data that the coatings disclosed herein exhibit significantly reduced ice adhesion strength.

### Example 2

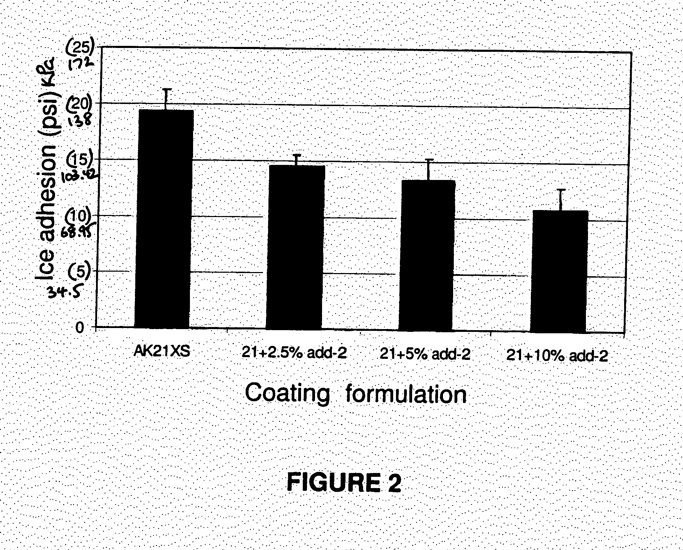

Two coats of AK21XS were applied to a primed aluminum substrate. Separately, additional primed substrates were coated with a single coat of AK21XS. After two hours, the single coated substrates were further coated with AK21XS comprising the additive bis(triethoxysilylpropyl)polyethylene oxide (25-30 ethylene oxide units, Gelest, Inc., additive 2) in increasing concentration. These separate coatings comprised 2.5, 5 and 10 weight percent of additive 2 with respect to the final cured coating. The adhesion strength of rime ice to each coated substrate was measured in an icing wind tunnel using a proprietary fixture. As displayed in Fig. 2, the coatings comprising additive 2 exhibited significantly reduced ice adhesion strength relative to AK21XS. The high reproducibility of these results is evidenced by the data shown in Fig. 2 for the coating comprising 10 weight percent additive 2, representing a total of 18 cycles of icing measurements performed on multiple coupons prepared from coatings made on three different days.

### Example 3

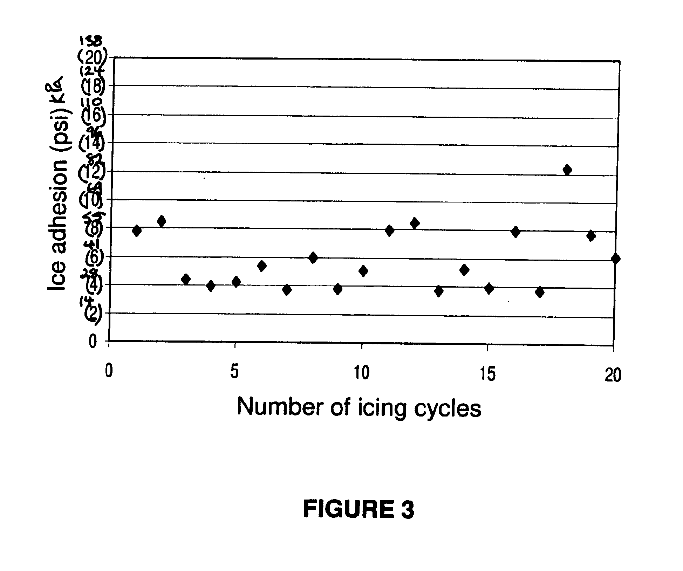

The adhesion strength of rime ice was measured, in an icing wind tunnel using a proprietary fixture, on a single coupon coated with AK3067 mixed with 5 weight percent of additive 1 (based on the total weight of the final cured coating) for a total of 20 icing cycles. As illustrated in Fig. 3, the ice release performance of the coating was durable through multiple icing cycles.

### Example 4

The adhesion of rime ice to replicates of two different coatings was measured in an icing wind tunnel using a proprietary fixture, before and after heat aging at 60 degrees Celsius for 7 days. The first coating comprised AK21XS and 5 weight percent of additive 1. The second coating comprised AK21XS and 10 weight percent additive 2. The data shown in Table 1 below clearly indicates that heat aging did not adversely affect the ice release properties of either coating.

**Table 1**

| Coating | Ice adhesion before heat aging (psi) KPa | Ice adhesion after heating to 60 °C for 7 days (psi) KPa |
|---|---|---|
| 21XS + 5% additive 1 | (6.30 ± 1.66) 43.44 ± 11.44 | (6.44 ±1.05) 44.40 ± 7.24 |
| 21XS + 10% additive 2 | (11.76 ± 1.37) 81.08 ± 9.45 | (10.11 ± 1.90) 69.70 ± 13.10 |

### Example 5

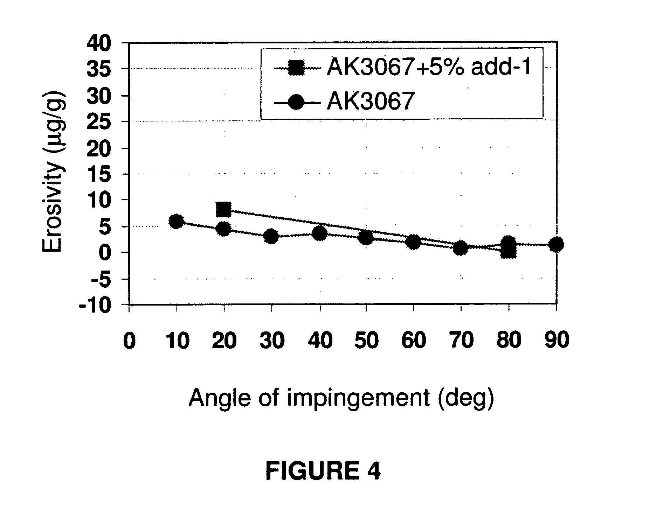

A coat of AK3067 was applied to a primed aluminum substrate. Similarly, a coat of AK3067 with 5 weight percent additive 1 was applied a primed aluminum substrate. The grit erosion resistance of each of the coatings was determined by measuring the weight loss following particle impact as a function of the angle of impingement. Each coupon was eroded with 300 grams of #120 white aluminum oxide. The data reported in Fig. 4 indicates that the erosion resistance of AK3067 coatings is not compromised when additive 1 is added to the coating composition.

### Example 6

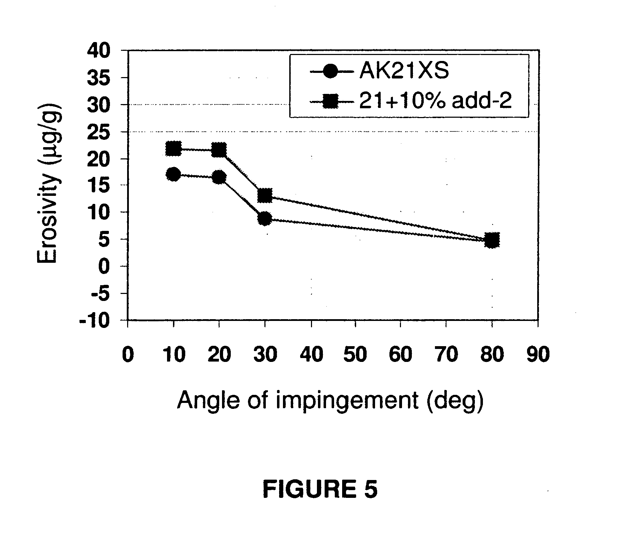

AK21XS coatings, with and without 10 weight percent additive 2, were applied to separate primed aluminum substrates. The grit erosion resistance of the coated substrates was determined by measuring the weight loss following particle impact as a function of the angle of impingement. Each coupon was eroded with 300 grams of #120 white aluminum oxide. The data reported in Fig. 5 indicates that the erosion resistance of AK21XS coatings is not significantly compromised when additive 2 is added to the coating composition.

All ranges disclosed herein are inclusive of the endpoints, and the endpoints are combinable with each other. The terms "first," "second," and the like as used herein do not denote any order, quantity, or importance, but are used to distinguish one element from another. The modifiers "about" and "approximately" used in connection with a quantity are inclusive of the stated value and have the meaning dictated by the context (e.g., includes the degree of error associated with measurement of the particular quantity). The use of the terms "a" and "an" and "the" and similar referents in the context of describing the invention (especially in the context of the following claims) are to be construed to cover both the singular and the plural, unless otherwise indicated herein or clearly contradicted by context.
For completeness, various aspects of the invention are now set out in the following numbered clauses:
1. An article comprising:
   a weatherable surface exposed to precipitation or airborne debris; and
   a weather resistant coating disposed on the weatherable surface, wherein the coating comprises:
      component A, a one- or two-part room temperature vulcanizable polyorganosiloxane composition; and
      component B, an ice release-enhancing proportion of at least one polyorganosiloxane comprising one or more silanol or alkoxy-silyl groups and comprising from 10 weight percent to 85 weight percent of at least one hydroxy-terminated or alkoxy-terminated polyoxyalkylenealkyl radical;
      and any reaction products thereof.
2. The article of clause 1, wherein component A comprises at least one reactive silicone, at least one condensation catalyst, and at least one crosslinking agent.
3. The article of clause 2, wherein the reactive silicone comprises a polydialkylsiloxane having the formula

   R¹(SiR²R²O)ₘ SiR²R²R¹ (I)

   wherein each R¹ is hydroxyl or

   -O-Si(R³)ₐ-(OR⁴)₃₋ₐ (II)

   and wherein each R² is independently a hydrocarbon or fluorinated hydrocarbon radical, each R³ and R⁴ is a hydrocarbon radical, a is 0, 1 or 2 and m has a value such that the viscosity of said reactive silicone under ambient temperature and pressure conditions is up to about 160,000 mPa·s (centipoise).
4. The article of clause 3, wherein each R², R³ and R⁴ is methyl.
5. The article of clause 2, wherein the condensation catalyst comprises a compound of tin, zirconium, titanium or aluminum.
6. The article of clause 2, wherein the crosslinking agent is a trifunctional or tetrafunctional silane.
7. The article of clause 1, wherein component B comprises compounds having the formula

   R⁵(SiR⁶R⁷O)ₙSiR⁶R⁷R⁵ (III)

   wherein at least one of the R^{5,6,7} radicals has the formula

   -R⁸-(OR⁹)_{Z}-OR¹⁰; (IV)

   wherein at least one of the R^{5,6,7} radicals is a hydroxyl group or an OR¹¹ group and any remaining R^{5,6,7} radicals are hydrocarbon or fluorinated hydrocarbon radicals; R⁸ and each R⁹ are a C₂₋₆ alkylene or a substituted alkylene; R¹⁰ is hydrogen or a C₁₋₄ primary or secondary alkyl, and R¹¹ is a C₁₋₁₀ primary or secondary alkyl; n has a value such that the weight average molecular weight of the compound is in a range of 300 to 40,000; and z and the number of radicals of formula (IV) are defined such that component B comprises from 10 weight percent to 85 weight percent radicals of formula (IV).
8. The article of clause 7, wherein R⁸ and R⁹ are ethylene, propylene, or trimethylene.
9. The article of clause 7, wherein R¹⁰ is hydrogen or methyl.
10. The article of clause 1, wherein component B comprises compounds of the formula
   R¹²R¹³R¹⁴Si(OSiR²₂)_{X}-R⁸-(OR⁹)_{Z}O-R⁸(R²₂SiO)_{y}SiR¹²R¹³R¹⁴ (V)

   wherein at least one of the R¹², R¹³ and R¹⁴ groups is a hydroxyl group or an OR¹¹ group and any remaining R¹², R¹³ and R¹⁴ groups are a hydrocarbon radical, a fluorinated hydrocarbon or a radicals of formula IV; wherein each R² a hydrocarbon or fluorinated hydrocarbon radical, wherein R⁸ and R⁹ are independently a C₂₋₆ alkylene or a substituted alkylene; and x, y and z have values such that the average molecular weight of the compound is in the range of 400 to 50,000 and the compound comprises at least 5% by weight of non silicone material.
11. The article of clause 1, wherein component B is present in the coating composition in an amount of 0.1 weight percent to 50 weight percent.
12. The article of clause 1, further comprising a reinforcing or non-reinforcing filler.
13. The article of clause 1, further comprising an antioxidant.
14. The article of clause 13, wherein the antioxidant is present in an amount between 0.01 weight percent and 5 weight percent based on the total weight of the coating composition.
15. The article of clause 13, wherein the antioxidant comprises 2,2'-methylene-bis(4-methyl-6-tert-butylphenol).
16. The article of clause 1, wherein the weatherable surface is an aerodynamic surface.
17. The article of clause 1, wherein the article is an aircraft component.
18. The article of clause 1, wherein the article is a wind turbine component.
19. The article of clause 1, further comprising:
   a second coating disposed between the weatherable surface and the weather resistant coating, wherein the second coating comprises component A and not component B.

## Claims

1. An article comprising:
a weatherable surface exposed to precipitation or airborne debris; and
a weather resistant coating disposed on the weatherable surface, wherein the coating comprises:
component A, a one- or two-part room temperature vulcanizable polyorganosiloxane composition; and
component B, an ice release-enhancing proportion of at least one polyorganosiloxane comprising one or more silanol or alkoxy-silyl groups and comprising from 10 weight percent to 85 weight percent of at least one hydroxy-terminated or alkoxy-terminated polyoxyalkylenealkyl radical;
and any reaction products thereof.

2. The article of claim 1, wherein component A comprises at least one reactive silicone, at least one condensation catalyst, and at least one crosslinking agent.

3. The article of claim 2, wherein the reactive silicone comprises a polydialkylsiloxane having the formula
R¹(SiR²R²O)ₘ SiR²R²R¹ (I)
wherein each R¹ is hydroxyl or
-O-Si(R³)ₐ-(OR⁴)₃₋ₐ (II)
and wherein each R² is independently a hydrocarbon or fluorinated hydrocarbon radical, each R³ and R⁴ is a hydrocarbon radical, a is 0, 1 or 2 and m has a value such that the viscosity of said reactive silicone under ambient temperature and pressure conditions is up to 160,000 mPa.s (centipoise).

4. The article of claim 3, wherein each R², R³ and R⁴ is methyl.

5. The article of claim 2, wherein the condensation catalyst comprises a compound of tin, zirconium, titanium or aluminum.

6. The article of any one of claims 2 to 5, wherein the crosslinking agent is a trifunctional or tetrafunctional silane.

7. The article of any preceding claim, wherein component B comprises compounds having the formula
R⁵S(SiR⁶R⁷O)nSiR⁶R⁷R⁵ (III)
wherein at least one of the R^{5,6,7} radicals has the formula
-R⁸-(OR⁹)_{z}-OR¹⁰ ; (IV)
wherein at least one of the R^{5,6,7} radicals is a hydroxyl group or an OR¹¹ group and any remaining R^{5,6,7} radicals are hydrocarbon or fluorinated hydrocarbon radicals; R⁸ and each R⁹ are a C₂₋₆ alkylene or a substituted alkylene; R¹⁰ is hydrogen or a C₁₋₄ primary or secondary alkyl, and R¹¹ is a C₁₋₁₀ primary or secondary alkyl; n has a value such that the weight average molecular weight of the compound is in a range of 300 to 40,000; and z and the number of radicals of formula (IV) are defined such that component B comprises from 10 weight percent to 85 weight percent radicals of formula (IV).

8. The article of claim 7, wherein R⁸ and R⁹ are ethylene, propylene, or trimethylene.

9. The article of claim 7 or claim 8, wherein R¹⁰ is hydrogen or methyl.

10. The article of any one of claims I to 6, wherein component B comprises compounds of the formula
R¹²R¹³R¹⁴Si(OSiR²2)_{X}-R⁸-(OR⁹)_{Z}O-R⁸(R²₂SiO)_{y}SiR¹²R¹³R¹⁴ (V)
wherein at least one of the R¹², R¹³ and R¹⁴ groups is a hydroxyl group or an OR¹¹ group and any remaining R¹², R¹³ and R¹⁴ groups are a hydrocarbon radical, a fluorinated hydrocarbon or a radicals of formula IV; wherein each R² a hydrocarbon or fluorinated hydrocarbon radical, wherein R⁸ and R⁹ are independently a C₂₋₆ alkylene or a substituted alkylene; and x, y and z have values such that the average molecular weight of the compound is in the range of 400 to 50,000 and the compound comprises at least 5% by weight of non silicone material.

11. The article of any preceding claim, wherein component B is present in the coating composition in an amount of 0.1 weight percent to 50 weight percent.

12. The article of any preceding claim, further comprising a reinforcing or non-reinforcing filler and/or an antioxidant.

## Patentansprüche

1. Gegenstand, umfassend:
eine Bewitterungsoberfläche, die der Abscheidung oder Teilchen aus der Luft ausgesetzt ist, und
einen wetterbeständigen Überzug, der auf der Bewitterungsoberfläche angeordnet ist, wobei der Überzug umfasst:
Komponente A, eine bei Raumtemperatur vulkanisierbare Einkomponenten- oder Zweikomponenten-Polyorganosiloxan-Zusammensetzung und
Komponente B, einen die Eisablösung fördernden Anteil mindestens eines Polyorganosiloxans, umfassend ein oder mehrere Silanol- oder Alkoxysilylgruppen und umfassend von 10 Gewichtsprozent (Gew.-%) bis 85 Gew.-% mindestens eines Polyoxyalkylenalkylrestes mit Hydroxylendgruppen oder Alkoxyendgruppen und
irgendwelche Reaktionsprodukte davon.

2. Gegenstand nach Anspruch 1, worin Komponente A mindestens ein reaktionsfähiges Silicon, mindestens einen Kondensationskatalysator und mindestens ein Vernetzungsmittel umfasst.

3. Gegenstand nach Anspruch 2, worin das reaktionsfähige Silicon ein Polydialkylsiloxan der Formel umfasst
R¹(SiR²R²O)ₘSiR²R²R¹ (I),
worin jedes R¹ Hydroxyl oder
-O-Si(R³)ₐ-(OR⁴)₃₋ₐ (II)
ist und worin jedes R² unabhängig ein Kohlenwasserstoff- oder fluorierter Kohlenwasserstoffrest ist, jedes R³ und R⁴ ein Kohlenwasserstoffrest ist, a 0, 1 oder 2 ist und m einen derartigen Wert hat, dass die Viskosität des reaktionsfähigen Silicons bei Umgebungstemperatur- und -druckbedingungen bis zu 160.000 mPa·s (Centipoise) ist.

4. Gegenstand nach Anspruch 3, worin jedes R², R³ und R⁴ Methyl ist.

5. Gegenstand nach Anspruch 2, worin der Kondensationskatalysator eine Verbindung von Zinn, Zirkonium, Titan oder Aluminium umfasst.

6. Gegenstand nach irgendeinem der Ansprüche 2 bis 5, worin das Vernetzungsmittel ein trifunktionelles oder tetrafunktionelles Silan ist.

7. Gegenstand nach irgendeinem vorhergehenden Anspruch, worin Komponente B Verbindungen der Formel
R⁵(SiR⁶R⁷O)ₙSᵢR⁶R⁷R⁵ (III)
umfasst, worin mindestens einer der R^{5,6,7}-Reste die Formel
-R⁸-(OR⁹)_{z}-(OR¹⁰) (IV)
hat, worin mindestens einer der R^{5,6,7} -Reste eine Hydroxylgruppe oder eine OR¹¹-Gruppe ist und irgendwelche übrigen R^{5,6,7}-Reste Kohlenwasserstoff- oder fluorierte Kohlenwasserstoffreste sind, R⁸ und jedes R⁹ ein C₂₋₆-Alkylen oder ein substituiertes Alkylen sind, R¹⁰ Wasserstoff oder ein primäres oder sekundäres C₁₋₄-Alkyl ist, und R¹¹ ein primäres oder sekundäres C₁₋₁₀-Alkyl ist, n einen derartigen Wert hat, dass das Gewichtsmittel des Molekulargewichtes der Verbindung in einem Bereich von 300 bis 40.000 liegt und z und die Anzahl der Reste von Formel (IV) derart definiert sind, dass Komponente B von 10 Gew.-% bis 85 Gew.-% Reste der Formel (IV) umfasst.

8. Gegenstand nach Anspruch 7, worin R⁸ und R⁹ Ethylen, Propylen oder Trimethylen sind.

9. Gegenstand nach Anspruch 7 oder Anspruch 8, worin R¹⁰ Wasserstoff oder Methyl ist.

10. Gegenstand nach irgendeinem der Ansprüche 1 bis 6, worin Komponente B Verbindungen der Formel
R¹²R¹³R¹⁴Si (OSiR²₂)ₓ-R⁸-(OR⁹)_{z}O-R⁸(R²₂SiO)_{y}SiR¹²R¹³R¹⁴ (V)
umfasst, worin mindestens eine der R¹²-, R¹³- und R¹⁴-Gruppen eine Hydroxylgruppe oder eine OR¹¹-Gruppe ist und irgendwelche übrigen R¹²-, R¹³- und R¹⁴ -Gruppen ein Kohlenwasserstoffrest, ein fluorierter Kohlenwasserstoffrest oder Reste der Formel (IV) sind, worin jedes R² ein Kohlenwasserstoff- oder fluorierter Kohlenwasserstoffrest ist, worin R⁸ und R⁹ unabhängig ein C₂₋₆-Alkylen oder ein substituiertes Alkylen sind und x, y und z derartige Werte haben, dass das mittlere Molekulargewicht der Verbindung in dem Bereich von 400 bis 50.000 liegt und die Verbindung mindestens 5 Gew.-% Nicht-Siliconmaterial umfasst.

11. Gegenstand nach irgendeinem vorhergehenden Anspruch, worin Komponente B in der Überzugszusammensetzung in einer Menge von 0,1 Gew.-% bis 50 Gew.-% vorhanden ist.

12. Gegenstand nach irgendeinem vorhergehenden Anspruch, weiter umfassend einen verstärkenden oder nicht verstärkenden Füllstoff und/oder ein Antioxidationsmittel.

## Revendications

1. Article comprenant :
- une surface dégradable par les intempéries, exposée aux précipitations et aux débris charriés par le vent,
- et un revêtement résistant aux intempéries, disposé sur la surface dégradable par les intempéries, lequel revêtement comprend :
- un composant A qui est une composition de polyorganosiloxane durcissable à température ambiante, qui se présente en une partie ou en deux parties,
- et un composant B, qui est un polyorganosiloxane au nombre d'au moins un, présent en une proportion telle qu'il favorise le détachement de la glace, comportant un ou plusieurs groupes de type silanol ou alcoxy-silyle et comportant, en une proportion de 10 % en poids à 85 % en poids, au moins un groupe poly(oxy-alcane-diyl)-alkyle à groupe terminal hydroxyle ou alcoxy,
- ainsi que tout produit de réaction de ces composants.

2. Article conforme à la revendication 1, dans lequel le composant A comprend au moins une silicone réactive, au moins un catalyseur de condensation, et au moins un agent de réticulation.

3. Article conforme à la revendication 2, dans lequel la silicone réactive comprend un poly(dialkyl-siloxane) de formule :
R¹(SiR²R²O)ₘSiR²R²R¹ (I)
dans laquelle
chaque symbole R¹ représente un groupe hydroxyle ou un reste de formule :
-O-Si(R³)ₐ(OR⁴)₃₋ₐ (II)
chaque symbole R² représente, indépendamment, un reste d'hydrocarbure ou d'hydrocarbure fluoré,
chaque symbole R³ ou R⁴ représente un reste d'hydrocarbure, l'indice a vaut 0, 1 ou 2,
et l'indice m a une valeur telle que la viscosité de ladite silicone réactive, dans les conditions ambiantes de température et de pression, vaut jusqu'à 160 000 mPa.s (centipoises).

4. Article conforme à la revendication 3, dans lequel chacun des symboles R², R³ et R⁴ représente un groupe méthyle.

5. Article conforme à la revendication 2, dans lequel le catalyseur de condensation comprend un composé de l'étain, du zirconium, du titane ou de l'aluminium.

6. Article conforme à l'une des revendications 2 à 5, dans lequel l'agent de réticulation est un silane trifonctionnel ou tétrafonctionnel.

7. Article conforme à l'une des revendications précédentes, dans lequel le composant B comprend des composés de formule :
R⁵(SiR⁶R⁷O)ₙSiR⁶R⁷R⁵ (III)
dans laquelle
au moins l'un des restes symbolisés par R⁵, R⁶ ou R⁷ est un reste de formule :
-R⁸-(OR⁹)_{z}-OR¹⁰ (IV)
au moins l'un des restes symbolisés par R⁵, R⁶ ou R⁷ est un groupe hydroxyle ou un groupe de formule -OR¹¹, et tout autre reste symbolisé par R⁵, R⁶ ou R⁷ est un reste d'hydrocarbure ou d'hydrocarbure fluoré,
R⁸ et chaque symbole R⁹ représentent des groupes alcanediyle en C₂₋₆ ou des groupes alcanediyle porteurs d'un ou de substituant(s), R¹⁰ représente un atome d'hydrogène ou un groupe alkyle primaire ou secondaire en C₁₋₄,
R¹¹ représente un groupe alkyle primaire ou secondaire en C₁₋₁₀, l'indice n a une valeur telle que la masse molaire moyenne en poids du composé se trouve dans la gamme de 300 à 40 000,
et l'indice z et le nombre de restes de formule (IV) ont des valeurs définies de telle sorte que le composant (B) comprend de 10 % en poids à 85 % en poids de restes de formule (IV).

8. Article conforme à la revendication 7, dans lequel R⁸ et R⁹ représentent des groupes éthanediyle, propanediyle ou tri(méthane-diyle).

9. Article conforme à la revendication 7 ou 8, dans lequel R¹⁰ représente un atome d'hydrogène ou un groupe méthyle.

10. Article conforme à l'une des revendications 1 à 6, dans lequel le composant B comprend des composés de formule :
R¹²R¹³R¹⁴Si(OSiR²₂)ₓ-R⁸ -(OR⁹)_{z}-OR⁸-(R²₂SiO)_{y}SiR¹²R¹³R¹⁴ (III)
dans laquelle
au moins l'un des restes symbolisés par R¹², R¹³ ou R¹⁴ est un groupe hydroxyle ou un groupe de formule -OR¹¹, et tout autre reste symbolisé par R¹², R¹³ ou R¹⁴ est un reste d'hydrocarbure ou d'hydrocarbure fluoré, ou un reste de formule (IV),
chaque symbole R² représente un reste d'hydrocarbure ou d'hydrocarbure fluoré
R⁸ et R⁹ représentent, indépendamment, des groupes alcanediyle en C₂₋₆ ou des groupes alcanediyle porteurs d'un ou de substituant(s),
et les indices x, y et z ont des valeurs telles que la masse molaire moyenne du composé se trouve dans la gamme de 400 à 50 000 et
que le composé comprend au moins 5 % en poids de substance non-siliconique.

11. Article conforme à l'une des revendications précédentes, dans lequel le composant (B) se trouve présent dans la composition de revêtement en une proportion de 0,1 % en poids à 50 % en poids.

12. Article conforme à l'une des revendications précédentes, qui comprend en outre une charge, renforçante ou non-renforçante, et/ou un anti-oxydant.
